# EUROPEAN PATENT APPLICATION

(11) **EP 2 479 054 A1**
(43) Date of publication of application: **25.07.2012**
(21) Application number: 11177312.3
(22) Date of filing: 11.08.2011
(51) Int. Cl.: B60K 11/08

(54) **Air intake opening and closing apparatus for vehicle**

(30) Priority: 20.01.2011 JP 2011009803
(71) Applicant: AISIN SEIKI KABUSHIKI KAISHA, Kariya-shi, Aichi-ken 448-8650 (JP)
(72) Inventor: Hori, Kenji, Kariya-shi, Aichi-ken,, 448-8650 (JP); Uchida, Shuhei, Kariya-shi, Aichi-ken,, 448-0027 (JP); Inoue, Yuichi, Kariya-shi, Aichi-ken,, 448-8650 (JP); Otsuka, Yu, Kariya-shi, Aichi-ken,, 448-8650 (JP)
(74) Representative: Winter, Brandl, Fürniss, Hübner, Röss, Kaiser, Polte - Partnerschaft

(57) **Abstract**

An air intake opening and closing apparatus for a vehicle includes a cover (15) provided at an air intake (14) formed at a front portion of a vehicle body (1), and a moving mechanism (20) configured to be supported by the vehicle body (1) and connected to the cover (15) so as to be driven by a drive source (27) and to move the cover (15) between a deployed position at which the cover (15) closes the air intake (14) and a retracted position at which the cover (15) opens the air intake (14).

## Description

### TECHNICAL FIELD

This disclosure generally relates to an air intake opening and closing apparatus for a vehicle.

### BACKGROUND DISCUSSION

Generally, a vehicle including an automobile is provided with an air intake for taking in air including a ram air into a front portion of the vehicle, that is, a portion forward of a radiator mounted on a front surface of an engine room, in order to release a heat of the radiator. For example, an air intake provided with a mechanism for opening and closing the air intake in order to, for example, regulate an amount of an air flow taken into the vehicle from the air intake is also suggested.

According to a grille opening and closing apparatus disclosed in JPS58-139519U (hereinafter referred to as Patent reference 1), plural elongated grille boards supported by a base frame that is attached on an edge portion of an air intake are driven by a drive source to pivot so as to open and close the air intake. A driving force of the drive source is transmitted to the elongated grille boards, for example, by means of an engagement between an elongated hole shaped engagement hole formed on an end portion of a link that is driven to pivot by the drive source and a pin formed on the elongated grille board in a protruding manner.

A device, that is a grille device, disclosed in DE10 2004 026 419 A1 (hereinafter referred to as Patent reference 2), which adjusts an air flow passing through inlet openings formed at a front area of a vehicle, is provided with control arrangements for adjusting the air flow passing through capture devices. The upper capture device is mounted on a mount position located rearward of a grille device.

The grille opening and closing apparatus disclosed in the Patent reference 1 is structured so that the plural elongated grille boards are arranged parallel with one another and pivot in an identical direction for opening and closing the air intake while retaining the parallel arrangement. According to the above-described structure, for example, even when the air intake is in a closed state, plural protrusions and recesses in a forward/rearward direction of the vehicle are formed by the plural elongated boards. This may increase an air resistance applied to the vehicle, which may result in reducing an aerodynamic performance of the vehicle.

According to the device disclosed in the Patent reference 2, even in a case that the air flow is blocked from passing through the capture device, air may be taken into a gap formed between the grille device and the capture devices because the capture devices are mounted rearward of the grille device. This may increase the air resistance applied to the vehicle, which may result in reducing the aerodynamic performance of the vehicle.

A need thus exists for an air intake opening and closing apparatus for a vehicle, which enhances an aerodynamic performance while the air intake formed at a front portion of the vehicle is closed.

### SUMMARY

According to an aspect of this disclosure, an air intake opening and closing apparatus for a vehicle includes a cover provided at an air intake formed at a front portion of a vehicle body, and a moving mechanism configured to be supported by the vehicle body and connected to the cover so as to be driven by a drive source and to move the cover between a deployed position at which the cover closes the air intake and a retracted position at which the cover opens the air intake.

According to the above-described structure, the cover is moved to the retracted position by the moving mechanism, and thus an interference between the air taken into an engine room via the air intake and the cover becomes extremely small or decreases to zero, which allows the air to be taken into the engine room efficiently from the air intake. On the other hand, the cover is moved to a deployed position by the moving mechanism, and thus the air intake is closed, for example, by means that the cover closely fits in the air intake. Therefore, an air resistance applied to the cover, which is mounted on the vehicle, may be reduced and an aerodynamic performance of the vehicle may be enhanced.

According to the above-described structure, the air intake opening and closing apparatus for the vehicle, which enhances the aerodynamic performance when the air intake formed at the front portion of the vehicle is closed, may be achieved.

According to a further aspect of this disclosure, the air intake opening and closing apparatus for the vehicle further includes a radiator grille mounted on the vehicle body at a position between the air intake and a radiator.

According to the above-described structure, the radiator provided at the inside of the engine room may be protected by the radiator grille.

According to a further aspect of this disclosure, the cover fits in the air intake while being in the deployed position.

According to the above-described structure, when the cover is in the deployed position, the cover is fitted in the air intake so as to tightly close the air intake. Therefore, the air resistance applied to the cover, which is mounted on the vehicle, may be reduced and the aerodynamic performance of the vehicle may be enhanced.

According to a further aspect of this disclosure, the retracted position is set to be positioned above the air intake relative to a vertical direction of the vehicle.

According to the above-described structure, the retracted position of the cover is set to be above the air intake in the vertical direction of the vehicle where there is a small space constraint for receiving the cover. Thus, the entire air intake is opened reliably when the cover is in the retracted position.

According to a further aspect of this disclosure, the moving mechanism includes a guide rail fixedly provided at the vehicle body, a sliding member provided on the guide rail in a slidable manner and being driven by the drive source so as to move along the guide rail, and an attachment member supported by the sliding member and fixedly provided at the cover.

According to the above-described structure, the moving mechanism has a simple structure including the guide rail, the sliding member and the attachment member but is not limited thereto. Furthermore, the path of the movement of the cover, that is, the deployed position and the retracted position of the cover, may be changed by, for example, changing a shape or a configuration of the guide rail. This may, for example, allow the design of the air intake opening and closing apparatus to be easily changed and modified so as to be adapted to various types of vehicles.

According to a further aspect of this disclosure, the sliding member includes a first sliding member arranged on a first portion of a moving direction of the sliding member and a second sliding member arranged on a second portion of the moving direction of the sliding member, the attachment member is connected to the first sliding member in a pivotable manner, the drive source is connected to the second sliding member. The air intake opening and closing apparatus for the vehicle further includes a link whose first end portion is connected to the second sliding member in a pivotable manner and whose second end portion is connected to the attachment member 30 in a pivotable manner, and a stopper for stopping the first sliding member that is positioned in a first position corresponding to the deployed position of the cover from moving in a direction away from a second position corresponding to the retracted position of the cover. The air intake opening and closing apparatus for the vehicle further includes a check mechanism provided at the guide rail and at the attachment member, and configured so as to restrict the link from pivoting when the first sliding member is positioned between the second position and the first position, and to allow the link to pivot when the first sliding member is positioned in the first position.

According to the above-described structure, the link is restricted from pivoting by, for example, the check mechanism when the first sliding member is positioned between the second position and the first position. At this time, the first sliding member and the attachment member are practically integrated as the unit via the link. Thus, as the second sliding member is actuated by the drive source, the first sliding member, the second sliding member, the attachment member and the link move along the guide rail together with the cover. On the other hand, when the first sliding member is positioned in the first position, the attachment member (and the first sliding member) is stopped by the stopper from moving in the forward direction of the vehicle, and the check mechanism allows the link to pivot, that is, the restriction on the pivoting movement of the link is released. At this time, the guide rail, the attachment member, the second sliding member and the link configure the link device (a so-called slider crank mechanism). Accordingly, when the second sliding member actuated by the drive source further moves in the forward direction of the vehicle along the guide rail while the above-mentioned state is established, the link pivots and the attachment member, together with the cover, pivot about the first connecting point. Thus, a degree of freedom in a path of movement of the cover is increased, thereby closing the air intake more reliably when the cover is in the deployed position.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a perspective view of a front portion of a vehicle body on which an air intake opening and closing apparatus according to an embodiment disclosed here is mounted;

Fig. 2A is a perspective view of the air intake opening and closing apparatus of the embodiment in a check position;

Fig. 2B is a perspective view of the air intake opening and closing apparatus of the embodiment in a retracted position;

Fig. 3 is a longitudinal sectional view of the air intake opening and closing apparatus of the embodiment;

Fig. 4 is a side view of a moving mechanism according to the embodiment and an operation thereof;

Fig. 5 is a cross sectional view of the moving mechanism according to the embodiment; and

Fig. 6 is a side view of the moving mechanism according to the embodiment and an operation thereof.

### DETAILED DESCRIPTION

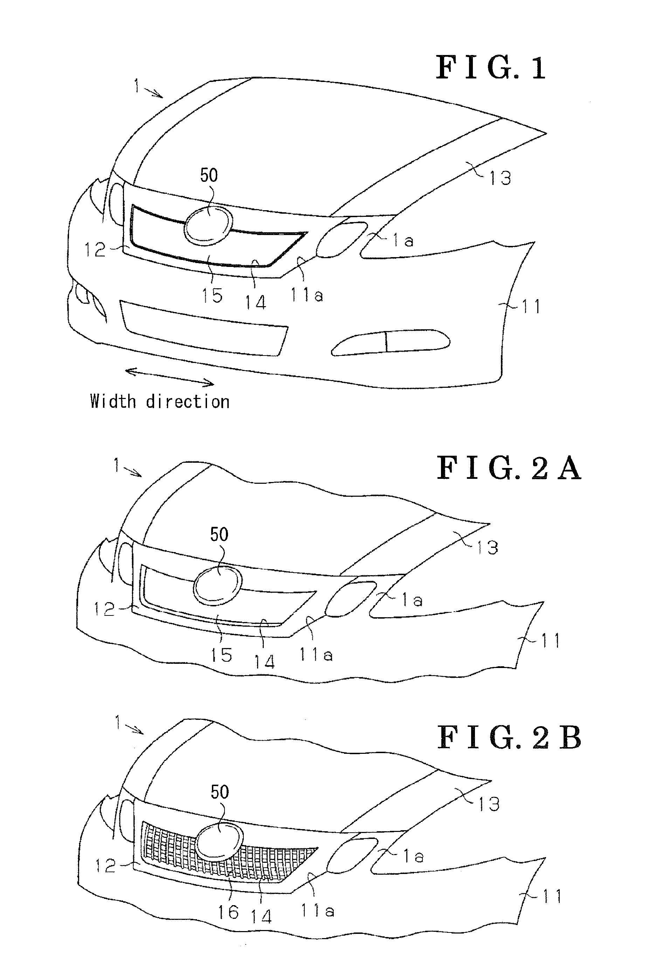

An embodiment of an air intake opening and closing apparatus for a vehicle, which is related to this disclosure will be explained with reference to Figs. 1 to 6 of the attached drawings. As shown in Fig. 1, a front bumper 11 is provided at a front portion of a vehicle body 1 of, for example, an automobile so as to extend in a width direction of a vehicle. A front frame 12 formed into a substantially trapezoidal shape is provided at a trapezoidal-shaped cutout portion 11a formed on an upper portion of the front bumper 11. The front bumper 11, the front frame 12 and an engine hood 13 extending in a rearward direction of the vehicle constitute a design face 1a of the vehicle in a manner that the front bumper 11, the front frame 12 and the engine hood 13 are connected to one another so as to form one extending surface of the front portion of the vehicle body 1.

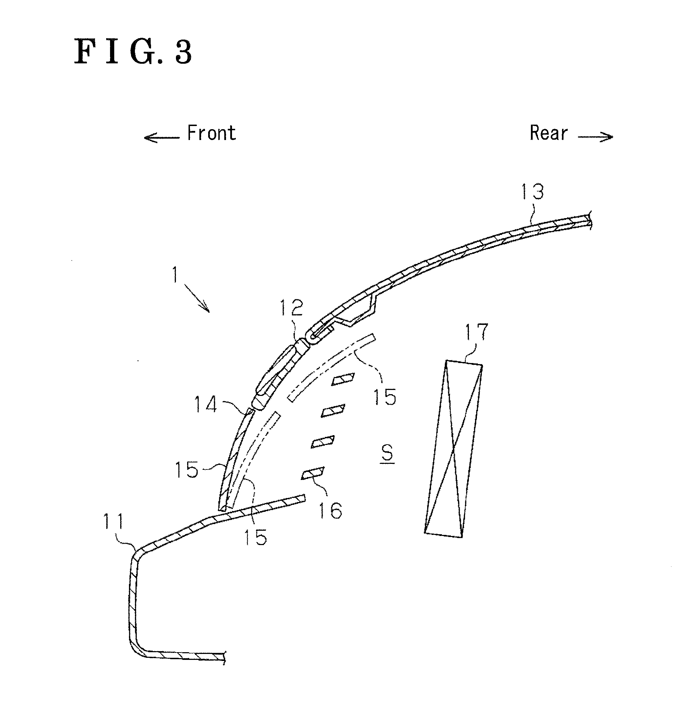

An air intake 14 is formed at an intermediate portion of the front frame 12 in a manner that an outline of the air intake 14 substantially extends along an outline of the front frame 12. A cover 15 for opening and closing the air intake 14 is provided at the air intake 14. The cover 15 is formed so that an outline thereof corresponds to the outline of the air intake 14. The cover 15 is movable from a deployed position at which the cover 15 fits in the air intake 14 to a check position at which the cover 15 is displaced substantially in the rearward direction of the vehicle from the deployed position and from the check position to a retracted position at which the cover 15 is upwardly displaced substantially along the design face 1a of the vehicle while retaining a posture that the cover 15 has in the check position, and in a sequence reverse to the above sequence (refer to Figs. 2A, 2B and 3). A marque 50 is attached on an upper peripheral intermediate portion of the air intake 14 so as to be positioned at an intermediate portion thereof in the width direction of the vehicle. By applying an appropriate color to a surface of the cover 15, a sense of high-grade symbolized by the marque 50 may be enhanced.

Thus, the cover 15 closes the air intake 14 while the cover 15 is in the deployed position and opens the air intake 14 while the cover 15 is in the retracted position. While the cover 15 is in the deployed position, the cover 15 is abutted against the front frame 12 (the design face 1 a of the vehicle) so that the cover 15 and the front frame 12 include a substantially identical curvature, that is, a step formed therebetween is minimized. A retraction space in which the cover 15 is retracted while the cover 15 is in the retracted position is ensured along a reverse surface of the front frame 12 above the air intake 14 in a vertical direction of the vehicle. The cover 15 is displaced or moves between the check position and the retracted position while retaining the posture that the cover 15 has in the check position, which allows the cover 15 to move without interfering with the design face 1 a (the front bumper 11, the front frame 12 and the engine hood 13).

As shown in Fig. 3, a radiator grille 16 having a grid configuration is provided at the vehicle body 1 so as to be positioned rearward of the air intake 14, specifically, to be arranged inside an engine room S that is closed by means of the engine hood 3. A radiator 17 is provided at the vehicle body 1 at the inside of the engine room S so as to be positioned rearward of the radiator grille 16. In other words, the radiator grille 16 is positioned between the air intake 14 and the radiator 17 in a forward/rearward direction of the vehicle. Accordingly, while the cover 15 is positioned in the retracted position, the radiator grille 16 is exposed to an outside of the front portion of the vehicle body 1 via the air intake 14. The area of each opening of a grid of the radiator grille 16 is sufficiently smaller than an opening area of the air intake 14.

According to the above-described structure, while the cover 15 is positioned in the deployed position, the air intake 14 is closed by the cover 15 that tightly or closely fits in the air intake 14, thereby reducing an air resistance applied to the vehicle. On the other hand, once the cover 15 is positioned in the retracted position, the air intake 14 is opened and an interference between air taken into the engine room S via the air intake 14 and the cover 15 becomes extremely small or decreases to zero. Thus, the air is taken into the engine room S efficiently via the air intake 14.

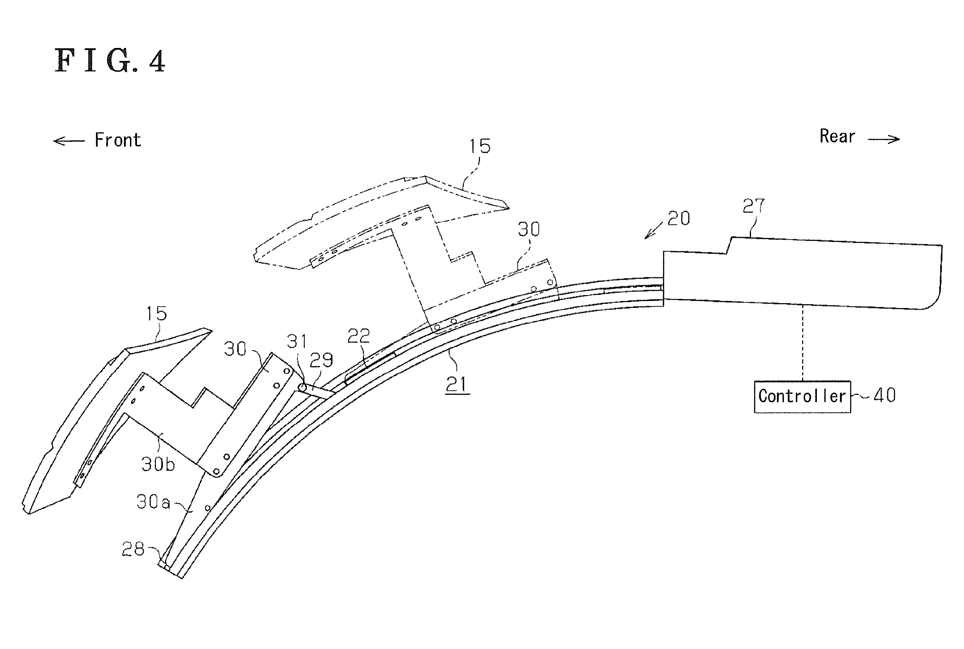

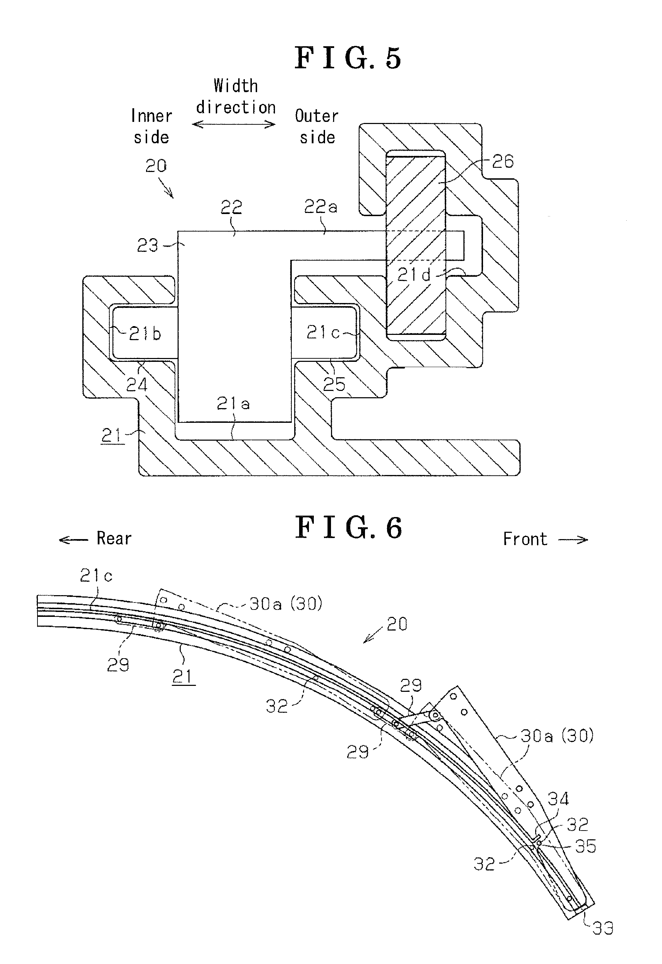

Next, a moving mechanism 20 for moving the cover 15 from the deployed position to the check position and from the check position to the retracted position, and in the sequence reverse to the above sequence will be explained. As shown in Fig. 4, in the engine room S, guide rails 21, 21 extending in a substantially forward/rearward direction of the vehicle are fixedly provided at the vehicle body 1 so as to be arranged in parallel with each other while keeping a distance therebetween in the width direction of the vehicle. Each of the guide rails 21 is curved at a substantially uniform curvature so as to upwardly protrude, that is, the guide rail 21 comes to be positioned downward as it extends in the forward direction of the vehicle. As shown in Fig. 5, the guide rail 21 includes a rail portion 21 a having a substantially U-shaped cross section that opens upwardly, and thus the guide rail 21 presents a substantially uniform cross section. A pair of guide portions 21 b, 21 c is provided so as to extend from open ends formed at the rail portion 21 a of each of the guide rails 21, 21 in the width direction of the vehicle. More specifically, the guide portion 21 b is formed at an inner end portion of each of the guide rail 21 so as to open to the rail portion 21 a in the width direction of the vehicle. On the other hand, the guide portion 21c is formed at an outer end portion of each of the guide rail 21 so as to open to the rail potion 21 a in the width direction of the vehicle. The guide portions 21b and 21c have substantially three-sided cross sections whose openings face each other in the width direction of the vehicle. The guide rail 21 also includes a belt-guiding portion 21d formed in the vicinity of the guide portion 21c so as to be positioned outwardly of the guide portion 21c in the width direction of the vehicle and having a substantially cross shape.

A rear shoe 22, which serves as a second sliding member constituting a sliding member, is provided on the guide rail 21 in a slidable manner, that is, in a manner that the rear shoe 22 slides on the guide rail 21 in the forward/rearward direction of the vehicle. The rear shoe 22 includes a shoe portion 23 formed into a block shape and sandwiched by the guide portions 21 b, 21c, and is provided on the guide rail 21 in the slidable manner. The rear shoe 22 also includes a pair of guide protrusions 24, 25 formed at an inner end surface and an outer end surface of the shoe portion 23 (i.e. a right end surface and a left end surface of the shoe portion 23 in Fig. 5) so as to protrude in the width direction of the vehicle. The guide protrusions 24, 25 engage with the guide portions 21g, 21c respectively in a manner that the guide protrusions 24, 25 slide inside the respective guide portions 21 b, 21 c in the forward/rearward direction of the vehicle. The rear shoe 22 includes a connecting strip 22a formed into a flange shape and outwardly protruding from an upper end of the shoe portion 23 in the width direction of the vehicle.

A push belt 26 is accommodated in the belt-guiding portion 21d of the guide rail 21 while allowing the push belt 26 to slide inside the belt-guiding portion 21d in the forward/rearward direction of the vehicle. The connecting strip 22a loosely and movably inserted into the belt-guiding portion 21d with allowance is connected to the push belt 26 in a manner that the connecting strip 22a penetrates the push belt 26 so as to move with the push belt 26 relative to the guide rail 21 as a unit. As shown in Fig. 4, the push belt 26 is connected to and actuated by an actuator 27 that is constituted by, for example, an electric motor and serves as a drive source. The actuator 27 is electrically connected to a controller 40 that is configured with, for example, a microcomputer, so that the actuator 27 is controlled to be actuated by the controller. The push belt 26 is actuated by the actuator 27 to be pushed and pulled in the forward/rearward direction of the vehicle, and thus moves along the belt-guiding portion 21d. Accordingly, as the push belt 26 actuated by the actuator 27 moves along the belt-guiding portion 21d, the rear shoe 22 moves interlockingly with the push belt 26 along the rail portion 21 a while allowing the guide protrusions 24, 25 to slide inside the guide portions 21 b, 21 c, respectively.

As shown in Fig. 4, a front shoe 28, which serves as a first sliding member constituting the sliding member, is provided on the guide rail 21 so as to be positioned forward of the rear shoe 22 in the forward/rearward direction of the vehicle in a manner that the front shoe 28 slides on the guide rail 21 in the forward/rearward direction of the vehicle. The front shoe 28 includes the shoe portion 23 and the guide protrusions 24, 25, which are identical to those included in the rear shoe 22.

A first end portion of a link 29 formed into an arm shape is pivotably connected to the rear shoe 22 at a position that corresponds to a position of the rail portion 21 a in the width direction of the vehicle. A second end portion of the link 29 is pivotably connected to a rear end portion of an attachment member 30. The attachment member 30 includes a supporting portion 30a formed into an elongated shape and extending in the forward/rearward direction of the vehicle at a position that corresponds to the position of the rail portion 21 a in the width direction of the vehicle, and an attachment portion 30b formed into a substantially Z-shape and fixedly attached to an upper portion of the supporting portion 30a. The second end portion of the link 29 is pivotably connected to a rear end portion of the supporting portion 30a by means of a shaft 31 whose axis extends in the width direction of the vehicle (a direction perpendicular to the paper on which Fig. 4 is drawn). A front end portion of the supporting portion 30a is pivotably connected to the front shoe 28. The cover 15 is fixedly attached to an upper surface of the attachment portion 30b. The front shoe 28 and the rear shoe 22 that are provided on the guide rail 21 so as to keep a distance therebetween in the forward/rearward direction of the vehicle (so as to be located on a first portion and a second portion in a moving direction of the moving mechanism 20) respectively, the link 29 and the attachment member 30 constitute the moving mechanism 20.

As shown in Fig. 6, an engagement pin 32 is formed at the supporting portion 30a of the attachment member 30 so as to protrude outwardly in the width direction of the vehicle (the direction perpendicular to the paper on which Fig. 6 is drawn). The engagement pin 32 controls a posture of the supporting portion 30a relative to the guide rail 21 in a manner that the engagement pin 32 basically engages with the guide portion 21c of the guide rail 21 while allowing the engagement pin 32 to be slidable relative to the guide portion 21 b in the forward/rearward direction of the vehicle. Specifically, the posture of the supporting portion 30a is controlled by the front shoe 28 connected to the front end portion of the supporting portion 30a and by the engagement pin 32 so that the supporting portion 30a (the attachment member 30) is positioned along a longitudinal direction of the guide rail 21. Thus, the front shoe 28 and the supporting portion 30a (the attachment member 30) are practically integrated with the rear shoe 22 via the link 29. Accordingly, as the rear shoe 22 moves along the rail member 21a in the forward/rearward direction of the vehicle in a previously-explained manner, the attachment member 30, the front shoe 28, the link 29 and the rear shoe 28 also move in the forward/rearward direction of the vehicle interlockingly with the rear shoe 22.

A stopper 33 for blocking a path of a movement of the supporting portion 30a in the forward direction of the vehicle is provided at a front end of the guide rail 21 in the forward/rearward direction of the vehicle. On the other hand, a portion of a ceiling portion of the guide portion 21c is cut and the cut portion is bent so as to stand upward for forming a locking lug 34 having a flange shape. The locking lug 34 is formed at a position that corresponds to a position of the engagement pin 32 of the supporting portion 30a when the supporting portion 30a is restricted by the stopper 33 from moving forward beyond the stopper 33. The locking lug 34, which protrudes upward, is positioned rearward relative to the engagement pin 32, and as a result, the cut and raised portion defines an engagement hole 35 on the ceiling portion of the guide portion 21 c, in a position forward of the engagement pin 32. The engagement hole 35 is set so as to release a path of a pivoting movement or unlock the pivoting movement of the engagement pin 32 when the supporting portion 30a pivots about a first connecting point where the supporting portion 30a is connected to the front shoe 28 in the counterclockwise direction in Fig. 6. That is, the path of the pivoting movement of the engagement pin 32 comes out of the guide portion 21c by means that the engagement hole 35. The guide portion 21c, the engagement pin 32, the locking lug 34 and the engagement hole 35 constitute a check mechanism.

Accordingly, in a state that the supporting portion 30a is restricted by the stopper 33 from moving forward beyond the supporting portion 33, when the rear shoe 22 moves along the rail portion 21a in the forward direction of the vehicle, the link 29 pushed by the rear shoe 22 pushes the rear end portion of the supporting portion 30a upwardly while pivoting about a second connecting point, where the link 29 is connected to the rear shoe 22, in the clockwise direction in Fig. 6. Accordingly, the supporting portion 30a pivots about the first connecting point in the clockwise direction in Fig. 6 while the engagement pin 32 penetrates through the engagement hole 35 so as to come out of the guide portion 21. A position of the cover 15 when the forward movement of the supporting portion 30a is restricted by the stopper 33 and when the link 29 starts pushing up the rear end portion of the supporting portion 30a refers to the check position. A position of the cover 15 when the link 29 completes pushing the rear end portion of the supporting portion 30a refers to the deployed position. In other words, when the supporting portion 30a (and the front shoe 28) is in a first position that corresponds to the deployed position of the cover 15, the supporting portion 30a (and the front shoe 28) is restricted by the stopper 33 from moving in the forward direction of the vehicle, that is, a direction in which the supporting portion 30a (and the front shoe 28) is moved away from a second position thereof which corresponds to the retracted position of the cover 15. In this case, the guide rail 21, the supporting portion 30a (the attachment member 30), the rear shoe 22 and the link 29 configure a link device (a so-called slider crank mechanism).

On the other hand, in a state that the link 29 completes pushing the rear end portion of the supporting portion 30a, when the rear shoe 22 starts moving along the rail portion 21a in the rearward direction of the vehicle, the link 29, the rear shoe 22, the attachment member 30 and the front shoe 28 are also moved in the rearward direction of the vehicle interlockingly with the rear shoe 22. At this time, the link 29 pulled by the rear shoe 22 pivots about the second connecting point in the clockwise direction in Fig. 6 while pulling the rear end portion of the supporting portion 30a downward. At the same time, the engagement pin 32 guided by the locking lug 34 moves through the engagement hole 35 and comes into the guide portion 21 c, and the supporting portion 30a pivots about the first connecting point in the counterclockwise direction in Fig. 6. The position of the cover 15 when the link 29 completes pulling the rear end portion of the supporting portion 30a downward refers to the check position.

After the link 29 completes pulling the rear end portion of the supporting portion 30a, as the rear shoe 22 further moves along the rail portion 21 a in the rearward direction of the vehicle, the supporting portion 30a (the attachment member 30) that is practically integrated with the rear shoe 22 via the link 29 also moves in the rearward direction of the vehicle. Thus, the cover 15 moves to the retracted position.

Next, an operation of the intake opening and closing apparatus of the embodiment will be explained. In a state that the cover 15 is in the retracted position, and when the push belt 26 actuated by the actuator 27 is pushed in the forward direction of the vehicle, the rear shoe 22, the front shoe 28, the link 29 and the attachment member 30 move together as the unit in the forward direction of the vehicle until the supporting portion 30a is restricted by the stopper 33 from moving. Accordingly, the cover 15 moves from the retracted position to the check position.

As the push belt 26 actuated by the actuator 27 is pushed further in the forward direction of the vehicle, the rear shoe 22 moves further in the forward direction of the vehicle along the guide rail 21. Thus, the link 29 pushed by the rear shoe 22 pivots about the second connecting point while pushing up the rear end portion of the supporting portion 30a and the supporting point 30a pivots about the second connecting point. Accordingly, the cover 15 moves from the check position to the deployed position.

On the other hand, in a case that the push belt 26 actuated by the actuator 27 is pulled in the rearward direction of the vehicle while the cover 15 is in the deployed position, the rear shoe 22 moves along the guide rail 21 in the rearward direction of the vehicle. The link 29 pulled by the rear shoe 22 pivots about the first connecting point while pulling down the rear end portion of the supporting portion 30a and the supporting portion 30a pivots about the second connecting point. Accordingly, the cover 15, together with the attachment member 30, is pulled in the rearward direction of the vehicle, that is, toward the engine room S, and thus the cover 15 moves from the deployed position to the check position. At this time, the cover 15 comes to be positioned substantially below the retraction space in the vertical direction of the vehicle, which allows the cover 15 to move diagonally upwardly into the retraction space.

As the push belt 26 actuated by the actuator 27 is pulled further in the rearward direction of the vehicle, the rear shoe 22, the front shoe 28, the link 29 and the attachment member 30 move together as the unit along the guide rail 21 in the rearward direction of the vehicle. Accordingly, the cover 15, together with the attachment member 30, moves into the retraction space, and thus the cover 15 moves from the check position to the retracted position. Thus, the radiator grille 16 is exposed to the outside of the front portion of the vehicle body 1 via the air intake 14.

As explained above, according to the air intake opening and closing apparatus of the embodiment, the following effects and advantages may be achieved. According to the embodiment, the cover 15 is moved to the retracted position by the moving mechanism 20, and thus the interference between the air taken into the engine room S via the air intake 14 and the cover 15 becomes extremely small or decreases to zero, which allows the air to be taken into the engine room S efficiently from the air intake 14. On the other hand, the cover 15 is moved to the deployed position by the moving mechanism 20, and thus the air intake 14 is closed, for example, in the manner that the cover 15 closely fits in the air intake 14. Therefore, the air resistance applied to the cover 15, which is mounted on the vehicle, may be reduced and an aerodynamic performance of the vehicle may be enhanced.

According to the embodiment, the radiator grille 16 is exposed to the outside of the front portion of the vehicle body 1 via the air intake 14 when the cover 15 is positioned in the retracted position. Thus, an appearance of the front portion of the vehicle body 1 may be changed according to the position of the cover 15, that is, according to whether the cover 15 is in the deployed position or the retracted position. Furthermore, the radiator 17 provided at the inside of the engine room S is protected by the radiator grille 16.

According to the embodiment, when the cover 15 is in the deployed position, the cover 15 is fitted in the air intake 14 so as to tightly close the air intake 14. Therefore, the air resistance applied to the cover 15, which is mounted on the vehicle, may be reduced and the aerodynamic performance of the vehicle may be enhanced.

According to the embodiment, the retracted position of the cover 15 is set to be above the air intake 14 in the vertical direction of the vehicle where there is a small space constraint for receiving the cover 15. Thus, the entire air intake 14 is opened reliably when the cover 15 is in the retracted position.

According to the embodiment, the moving mechanism 20 has a simple structure including the guide rail 21, the rear shoe 22, the front shoe 28 and the attachment member 30 but is not limited thereto. Furthermore, the path of the movement of the cover 15, that is, the deployed position and the retracted position of the cover 15, may be changed by, for example, changing a shape or a configuration of the guide rail 21. This may, for example, allow the design of the air intake opening and closing apparatus to be easily changed and modified so as to be adapted to various types of vehicles.

According to the embodiment, the rotation of the link 29 is restricted by means of, for example, the engagement pin 32, the locking lug 34 and the engagement hole 35, the guide portion 21 c while the front shoe 28 is positioned between the second position and the first position. At this time, the front shoe 28 and the attachment member 30 are practically integrated as the unit via the link 29. Thus, as the rear shoe 22 is actuated by the actuator 27, the front shoe 28, the rear shoe 22, the attachment member 30 and the link 29 move along the guide rail 21 together with the cover 15. On the other hand, when the front shoe 28 is positioned in the first position, the attachment member 30 (and the front shoe28) is stopped by the stopper 33 from moving in the forward direction of the vehicle, and the engagement pin 32 and so forth allow the link 29 to pivot, that is, the restriction on the pivoting movement of the link 29 is released. Accordingly, when only the rear shoe 22 actuated by the actuator 27 further moves in the forward direction of the vehicle along the guide rail 21 while the above-described state is established, the link 29 pivots and the attachment member 30, together with the cover 15, pivot about the first connecting point. Thus, a degree of freedom in the path of movement of the cover 15 is increased, thereby closing the air intake 14 more reliably when the cover 15 is in the deployed position.

According to the embodiment, when the cover 15 is in the deployed position, the cover 15 is abutted against the front frame 12 (the design face 1a of the vehicle), which includes a curved surface, at the substantially same curvature. Therefore, the aerodynamic performance and an aesthetic quality of the vehicle may be enhanced.

According to the embodiment, the air is controlled not to enter into the engine room S by positioning the cover 15 in the deployed position when, for example, a temperature of an engine cooling fluid is low, and thus a warming-up performance of the engine may be enhanced. On the other hand, the air may be effectively taken into the engine room S from the air intake 14 by positioning the cover 15 in the retracted position when, for example, the temperature of the engine cooling fluid is high, and thus a cooling performance of the engine may be enhanced.

The embodiment may be changed as will be explained below. Instead of the push belt 26, for example, a push cable or a timing belt having gear-shaped protrusions and recesses may be used.

The link 29 may be omitted from the structure of the embodiment so that the rear shoe 22 directly supports the supporting portion 30a (the attachment member 30). In this case, the rear shoe 22 and the front shoe 28 may be integrated with each other so as to configure the sliding member.

The retracted position of the cover 15 may be set to be positioned, for example, below the air intake 14 as long as the retraction space is ensured below the air intake 14 in the vertical direction of the vehicle. When the cover 15 is in the deployed position, the cover 15 may be arranged in other manners instead of being fitted in the air intake 14 as long as the cover 15 is arranged tightly or closely at the air intake 14. When the cover 15 is in the retracted position, the cover 15 and the front frame 12 (the design surface 1 a of the vehicle) may be connected with each other in other manners instead of being abutted against each other.

The air intake opening and closing apparatus of the embodiment may include a structure where the air intake 14 (and the cover 15) is not exposed to the outside of the front end portion of the vehicle body 1. The radiator grille 16 may include a mesh configuration where slits are defined by a combination of plural vertical frames and plural horizontal frames, or by either the plural vertical frames or the plural horizontal frames. The radiator grille 16 may be omitted from the structure of the air intake opening and closing apparatus.

## Claims

1. An air intake opening and closing apparatus for a vehicle, comprising:
a cover (15) provided at an air intake (14) formed at a front portion of a vehicle body (1); and
a moving mechanism (20) configured to be supported by the vehicle body (1) and connected to the cover (15) so as to be driven by a drive source (27) and to move the cover (15) between a deployed position at which the cover (15) closes the air intake (14) and a retracted position at which the cover (15) opens the air intake (14).

2. The air intake opening and closing apparatus for the vehicle according to claim 1, further comprising:
a radiator grille (16) mounted on the vehicle body (1) at a position between the air intake (14) and a radiator (17).

3. The air intake opening and closing apparatus for the vehicle according to claim 1, wherein the cover (15) fits in the air intake (14) while being in the deployed position.

4. The air intake opening and closing apparatus for the vehicle according to claim 1, wherein the retracted position is set to be positioned above the air intake (14) relative to a vertical direction of the vehicle.

5. The air intake opening and closing apparatus for the vehicle according to claim 1, wherein the moving mechanism (20) includes a guide rail (21) fixedly provided at the vehicle body (1), a sliding member (22, 28) provided on the guide rail (21) in a slidable manner and being driven by the drive source (27) so as to move along the guide rail (21), and an attachment member (30) supported by the sliding member (22, 28) and fixedly provided at the cover (15).

6. The air intake opening and closing apparatus for the vehicle according to claim 5, wherein
the sliding member (22, 28) includes a first sliding member (28) arranged on a first portion of a moving direction of the sliding member (22, 28) and a second sliding member (22) arranged on a second portion of the moving direction of the sliding member (22, 28),
the attachment member (30) is connected to the first sliding member (28) in a pivotable manner,
the drive source (27) is connected to the second sliding member (22), and
the air intake opening and closing apparatus for the vehicle further includes
a link (29) whose first end portion is connected to the second sliding member (22) in a pivotable manner and whose second end portion is connected to the attachment member (30) in a pivotable manner,
a stopper (33) for stopping the first sliding member (28) that is positioned in a first position corresponding to the deployed position of the cover (15) from moving in a direction away from a second position corresponding to the retracted position of the cover (15), and
a check mechanism (21c, 32, 34, 35) provided at the guide rail (21) and at the attachment member (30) and configured so as to restrict the link (29) from pivoting when the first sliding member (28) is positioned between the second position and the first position, and to allow the link (29) to pivot when the first sliding member (28) is positioned in the first position.
